# EUROPEAN PATENT APPLICATION

(11) **EP 4 524 847 A1**
(43) Date of publication of application: **19.03.2025**
(21) Application number: 24168523.9
(22) Date of filing: 04.04.2024
(51) Int. Cl.: G06Q 10/0631, G06Q 10/08, G06Q 10/087, G06Q 30/0601, G06Q 50/04

(54) **ORDER PROCESSING METHOD AND APPARATUS, DEVICE AND STORAGE MEDIUM**

(30) Priority: 13.09.2023 CN 202311193130
(71) Applicant: Zhejiang Hengyi Petrochemical Co., Ltd., Zhejiang 311200 (CN)
(72) Inventor: ZHAO, Donghua, Hangzhou 311200 (CN); WANG, Peng, Hangzhou 311200 (CN); ZHANG, Yong, Hangzhou 311200 (CN); PENG, Xiantao, Hangzhou 311200 (CN)
(74) Representative: Hannke Bittner & Partner mbB Regensburg

(57) **Abstract**

An order processing method including pre-checking a first product order on an online shopping platform to obtain a second product order (S101); determining a target production factory from a plurality of production factories based on product parameters of a target product or an estimated cost (S102); generating a production scheduling order of the target product and sending the production scheduling order to the target production factory (S103); updating the second product order on the online shopping platform based on latest progress information of the production scheduling order obtained from the target production factory (S104); generating a delivery order based on inventory information of the target product after completion of the production scheduling order and sending the delivery order to a logistics platform (S105); and updating the second product order on the online shopping platform based on latest progress information of the delivery order obtained from the logistics platform (S106).

## Description

### TECHNICAL FIELD

The present disclosure relates to the field of computer technology, in particular, to the fields of online shopping malls, order management, and industrial internet technology.

### BACKGROUND

B2B (Business-to-Business) and B2C (Business-to-Consumer) are two different e-commerce models that exhibit significant differences in target markets, merchandise types, and sales strategies. B2B online shopping malls can provide highly customized products and services for corporate customers. These products may need to be adjusted according to unique needs of each customer, including size, material, packaging, and labeling. A pricing structure of the B2B online shopping malls is usually more complex, as factors such as supply chain integration, regular delivery, logistics cost, bulk order, and special customer requirement need to be considered.

### SUMMARY

The present disclosure provides order processing method and apparatus, a device and a storage medium to solve or alleviate one or more technical problems in prior art.

At the first aspect, the present disclosure provides an order processing method including:
pre-checking a first product order on an online shopping platform to obtain a second product order;
determining at least one target production factory from a plurality of production factories based on product parameters of a target product or an estimated cost in a case where the second product order needs to be produced;
generating a production scheduling order of the target product and sending the production scheduling order to the at least one target production factory;
updating the second product order on the online shopping platform based on latest progress information of the production scheduling order obtained from the target production factory;
generating a delivery order based on inventory information of the target product after completion of the production scheduling order and sending the delivery order to a logistics platform; and
updating the second product order on the online shopping platform based on latest progress information of the delivery order obtained from the logistics platform.

At the second aspect, the present disclosure provides an order processing apparatus including:
a pre-checking module configured to pre-check a first product order on an online shopping platform to obtain a second product order;
a first screening module configured to determine at least one target production factory from a plurality of production factories based on product parameters of a target product or an estimated cost in a case where the second product order needs to be produced;
a first updating module configured to update the second product order on the online shopping platform based on latest progress information of a production scheduling order obtained from the target production factory;
a production scheduling module configured to generate the production scheduling order of the target product and send the production scheduling order to the at least one target production factory;
a first delivery module configured to generate a delivery order based on inventory information of the target product after completion of the production scheduling order and send the delivery order to a logistics platform; and
a second updating module configured to update the second product order on the online shopping platform based on latest progress information of the delivery order obtained from the logistics platform.

At the third aspect, the present disclosure provides an electronic device including:
at least one processor; and
a memory connected in communication with the at least one processor,
where the memory stores an instruction executable by the at least one processor, and the instruction, when executed by the at least one processor, enables the at least one processor to execute any method of the embodiment of the present application.

At the fourth aspect, the present disclosure provides a non-transitory computer-readable storage medium storing a computer instruction thereon, where the computer instruction is used to cause a computer to execute any method of the embodiment of the present application.

The technical solution provided in the present disclosure helps to build an integrated platform for the online shopping mall, multi factory production, and warehouse logistics.

It should be understood that the content described in this part is not intended to identify critical or essential features of the embodiment of the present disclosure, nor is it used to limit the scope of the present disclosure. Other features of the present disclosure will be easily understood through the following description.

### BRIEF DESCRIPTION OF THE DRAWINGS

In the accompanying drawings, same or similar components or elements are represented by reference numerals throughout the accompanying drawings, unless otherwise specified. The accompanying drawings may not necessarily be drawn to scale. It should be understood that the accompanying drawings only depict some implementations provided according to the present disclosure and should not be considered as limiting the scope of the present disclosure.
FIG. 1 is a schematic flowchart of an order processing method provided by the embodiment of the present disclosure.
FIG. 2 is a structural schematic diagram of an order processing control apparatus provided by the embodiment of the present disclosure.
FIG. 3 is a block diagram of an electronic device for implementing the embodiment of the present disclosure.

### DETAILED DESCRIPTION

The present disclosure will be further described in detail below with reference to the accompanying drawings. Same reference numerals in the accompanying drawings indicate elements with same or similar functions. Although various aspects of the embodiment are shown in the accompanying drawings, it is not necessary to draw the accompanying drawings to scale, unless otherwise specified.

In addition, in order to better illustrate the present disclosure, numerous specific details are provided in the detailed description below. Those having ordinary skill in the art should understand that the present disclosure may also be implemented without the specific details. In some examples, no detailed descriptions are provided for methods, means, components, and circuits that are familiar to those having ordinary skill in the art, in order to highlight the main purpose of the present disclosure.

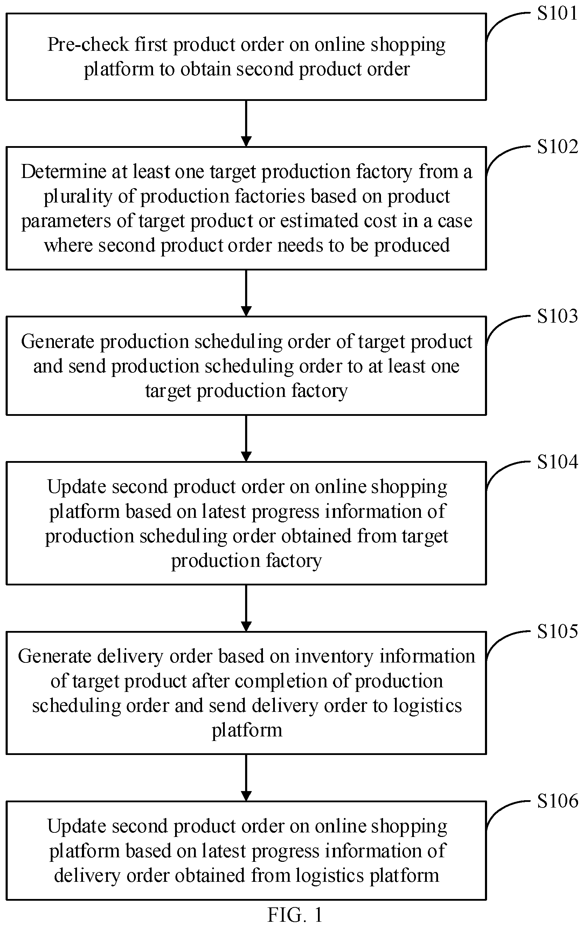

FIG. 1 is a schematic flowchart of an order processing method provided by the embodiment of the present disclosure. As shown in FIG. 1, the method includes at least the following steps.

In step S101, a first product order on an online shopping platform is pre-checked to obtain a second product order.

In the embodiment of the present disclosure, the online shopping platform may be in any form based on a website, application, or mini program. A user may purchase a variety of products on the online shopping platform, the products may include either pre-produced stocks or products that are currently out of stock and need to be produced. The online shopping platform may display the variety of products and their corresponding specific specifications or product parameters. Such products with a complete set of preset product parameters being listed may be understood as regular products. In addition to the regular products, online shopping platforms may also provide customization of differentiated products.

In one example, the online shopping platform has a customized page for setting or selecting specifications and product parameters for the differentiated products. The customized page may provide a selection list of a plurality of specifications and product parameters, thereby quickly and accurately determining various specifications and product parameters of the differentiated products. The product parameters include but are not limited to processing devices, processing methods, types of raw materials, specific processes, various performance indicators, and the like used in each stage during a production and processing process, such as a production factory, a production workshop, a batch number, a fiber size, a spindle weight, and the like.

For an order application (that is the first product order) submitted by the online shopping platform, since some products are not in stock and require customized production, it is necessary to pre-check the first product order in order to confirm whether a target product in the first product order may be produced and delivered according to conditions such as a schedule requirement and product parameter requirements. After the pre-checking is passed, both a buyer and a seller reach an agreement on contents of the order, and the first product order is converted into the second product order. The first product order that does not pass the pre-checking may be modified and resubmitted.

In step S102, at least one target production factory is determined from a plurality of production factories based on product parameters of the target product or an estimated cost in a case where the second product order needs to be produced.

In the embodiment of the present disclosure, needing to be produced of the second product order may be understood as insufficient inventory of the target product in the order. Specifically, it may include different situations such as a situation in which the target product has a certain amount of inventory but still needs to be produced due to the insufficient inventory, or a situation in which the target product has no corresponding inventory and needs to be produced entirely, such as in a case of a customized differentiated product. In a case of the plurality of production factories, costs incurred in completing production and delivery of the order through different production factories are usually different. For example, due to a difference in a distance between an address of each production factory and a delivery address of the order, a logistics cost of delivering a same batch of products is inevitably different. Especially for products with large volume or large weight, the logistics cost is an important component of the estimated cost. Therefore, for the target product that needs to be produced, it is necessary to consider from perspectives of an entire supply chain how to produce qualified products at a lower cost and complete order delivery.

In one example, a first aspect to consider is whether each production factory has an ability to produce the target product due to differences in production devices, that is, whether each production factory can achieve the product parameters specified in the second product order. Then, a production factory with a lower estimated cost is selected from optional production factories having the ability to produce the target product. It is assumed that a plurality of optional production factories has same or similar production costs for producing the target product of a same quantity, it is also necessary to consider the logistics cost required for delivering the product. Thus the at least one target production factory is determined from the plurality of production factories. A production task of the second product order is completed by one target production factory or coordinating of a plurality of target production factories.

In step S103, a production scheduling order of the target product is generated and sent to the at least one target production factory.

The production scheduling order of the target production factory is generated and sent to the corresponding target production factory after the target production factory and corresponding yield and production period are determined.

In step S104, the second product order is updated on the online shopping platform based on latest progress information of the production scheduling order obtained from the target production factory.

Information of the production factory corresponding to the second product order and the latest progress information during execution of the production scheduling order may be synchronized to the online shopping platform for the user to check and understand at any time.

In step S105, a delivery order is generated based on inventory information of the target product after completion of the production scheduling order and sent to a logistics platform.

In the embodiment of the present disclosure, inventory of each factory region (production factory) may be uniformly scheduled based on the latest inventory information of the target product after the completion of the production scheduling order, and a delivery vehicle may be arranged for shipment through the logistics platform.

The logistics platform is used for product delivery, and may include self-operated delivery vehicles and third-party delivery vehicles. After obtaining the delivery order, the logistics platform may display relevant information of the delivery order, and a driver of the delivery vehicle may draw a corresponding delivery task, or the delivery task may be directly dispatched to a designated driver.

In step S106, the second product order is updated on the online shopping platform based on latest progress information of the delivery order obtained from the logistics platform.

According to the scheme of the embodiment of the present disclosure, unified integration of an order processing process for an industrial product is achieved by ordering an product by a customer online, allocating a production task between the plurality of factory regions, and then completing order delivery offline. It is possible to digitize an entire process from purchase to delivery of a conventional product and a customized differentiated product online, connecting sales, production, and logistics information, facilitating real-time understanding of order progress by an enterprise customer, and helping to build an integrated platform for the online shopping mall, multi factory production, and warehouse logistics.

In a possible implementation, the step S101 of pre-checking the first product order on the online shopping platform to obtain the second product order further includes steps S1011 to S1013.

In step S1011, the first product order drafted by a user is obtained from the online shopping platform.

In step S1012, product parameters of a differentiated product are determined in a case where the first product order includes the differentiated product.

In step S1013, the second product order which has been pre-checked is obtained based on the product parameters of the differentiated product and a preset producible list. The preset producible list is obtained based on product parameter ranges corresponding to production devices of the plurality of production factories.

In the embodiment of the present disclosure, if the target product in the first product order has sufficient stock, the first product order may directly pass the pre-checking. If the target product is a regular product, but a current stock is insufficient, it is necessary to determine whether the target product may be scheduled for production in the near future to determine whether the first product order passes the pre-checking. If the target product is the differentiated product, it is necessary to determine whether the first product order passes the pre-checking based on target product parameters specified by the user. The target product parameters may be understood as the product parameters specified by the user for the differentiated product. Specifically, there may be contradictions between the target product parameters specified by the user, resulting in a single target product parameter being within a theoretical range or an optional range provided by the online shopping platform, but an overall target product parameter cannot be achieved by combining the target product parameters. As such, actual executable parameters of various products may be determined in advance based on the product parameter ranges of various production devices of the plurality of production factories to obtain the preset producible list.

In a chemical fiber product, the target product parameters include but are not limited to any one of a product name, a batch number, a yarn type, a yarn spindle diameter, a yarn spindle specification, a linear density deviation rate, a linear density variation coefficient, a fracture elongation rate, a fracture strength variation coefficient, an unevenness rate, and an oil content. It may also include a specific model and a machine number of each production device, so that the customer may specify a specific production device, thereby providing highly customized products and services.

In a possible implementation, the step S102 of determining the at least one target production factory from the plurality of production factories based on the product parameters of the target product or the estimated cost in the case where the second product order needs to be produced further includes the following step.

The at least one target production factory is determined from the plurality of production factories based on the product parameters of the target product in a case where the second product order needs to be produced and the target product is the differentiated product.

In the embodiment of the present disclosure, for the differentiated product, determining a production factory that may produce the target product is determined preferentially based on the product parameters specified by the user. If there is only one production factory that may produce the target product, it will automatically become the target production factory. For example, in order to ensure product consistency, the customer specifies a machine number of a production device that has produced previous orders. If there is more than one production factory that may produce the target product, the target production factory may be determined further based on the estimated cost of each target production factory.

In a possible implementation, the step S102 of determining the at least one target production factory from the plurality of production factories based on the product parameters of the target product or the estimated cost in the case where the second product order needs to be produced further includes step S 1021.

In step S1021, the at least one target production factory is determined from the plurality of production factories based on estimated logistics costs in a case where the second product order needs to be produced and the target product is the regular product.

In the embodiment of the present disclosure, for the regular product that may be produced by the plurality of production factories, the target production factory is determined based on estimated costs of fulfilling the second product order by the plurality of production factories. It is assumed that raw material costs and production efficiency of each production factory are similar, a factor that affects the estimated cost may include the logistics cost. For the logistics cost, estimates may be made based on a number of required vehicles and a delivery distance. Generally, an order from a first customer closest to a factory A has the lowest cost at being produced and delivered by the factory A. If distances between a second customer and factories B and C are similar, either the factory B or the factory C or both of them may produce. When delivering after production is completed, further consideration may be given to whether the logistics cost may be reduced through allocation, carpooling, and other means.

In a possible implementation, the step S 1021 of determining the at least one target production factory from the plurality of production factories based on the estimated logistics costs in the case where the second product order needs to be produced and the target product is the regular product further includes the following steps.

A first shipment factory is determined based on existing inventory information of the target product in a case where the target product of the second product order is the regular product and has insufficient inventory.

A plurality of neighboring factories is screened from the plurality of production factories based on a delivery address of the second product order and an address of the first shipment factory.

At least one of the plurality of neighboring factories is combined with the first shipment factory to obtain a plurality of production schemes.

The estimated logistics costs of the plurality of production schemes are determined.

An optimal target production scheme is determined based on the estimated logistics costs.

The target production factory is obtained based on the first shipment factory and a neighboring factory corresponding to the target production scheme.

In the embodiment of the present disclosure, priority shipment is usually required for products that have already been produced. For the target product to be produced, it is necessary to consider the estimated cost of each production factory to determine the target production factory.

In an example, a company has 7 production factories located in different cities or regions, named A, B, C, D, E, F and G. When executing a first customer's product order, it firstly determines that the Factory B and the Factory D have inventory of the target product based on the existing inventory information of the target product in a product order, and prioritize shipment of inventory products. Therefore, each of the Factory B and the Factory D is the first shipment factory. Then it is necessary to determine the target production factory from the 7 production factories to produce remaining products in the product order and complete shipment. In order to control the logistics cost, it may be determined that neighboring factories of the first customer are the Factory A and the Factory E based on an address of the first customer, thus the Factory A and the Factory E may be arranged for production each as a second shipping factory. Meanwhile, a neighboring factory of the Factory B is the Factory F, which is within a route for shipping to the first customer from the Factory B, thus, the Factory F may also produce the target product and ship the target product by carpooling with the Factory B. The specific steps include the followings.

### 1. Determining the first shipment factory:

Firstly, checking the inventory information of the target product in the product order.

Determining that the Factory B and the Factory D have inventory of the target product.

Arranging shipment of the inventory products from the Factory B and the Factory D to fulfill an order requirement.

### 2. Determining the neighboring factories:

Determining that the Factory A and the Factory E are factories close to a delivery address of the first customer based on the delivery address, and the Factory A and the Factory E may be considered as factories for production and shipment.

Besides, according to needs, it is possible to confirm distances between other factories and the first shipment factories in order to consider a possibility of carpooling with the first shipment factories (the Factory B and the Factory D).

### 3. Combining the production schemes:

Selecting at least one factory from the neighboring factories (the Factory A, the Factory E and the possible Factory F) to be combined with the first shipment factories (the Factory B and the Factory D) for production of remaining products.

It ensures that consideration of factors such as production capacity, efficiency, and resource availability between factories.

### 4. Estimating the logistics cost:

Estimating the logistics cost of each production scheme, including transportation fees, cargo delivery time, and selection of transportation tools.

Calculating of the logistics cost may need to consider multiple factors, such as distance, cargo volume, weight, carpooling, and the like.

### 5. Selecting the optimal scheme:

Determining the optimal target production scheme based on the estimated logistics cost.

The optimal target production scheme may be a solution with the lowest total logistics cost, or may be chosen based on other optimization objectives.

### 6. Determining the target production factory:

Determining the target production factory, that is, the factories for producing the remaining products, based on the optimal scheme.

The selection of the target production factory may be influenced by various factors, including production capacity, inventory situation, production efficiency, and the like.

### 7. Carpooling with the first shipment factories:

If the logistics cost optimization scheme includes carpooling with the first shipment factories (the Factory B and the Factory D), it ensures coordination and planning of transportation to minimize costs to the greatest extent possible.

In a possible implementation, the step S105 of generating the delivery order based on the inventory information of the target product after the completion of the production scheduling order and sending the delivery order to the logistics platform further includes steps S1051 to S1053.

In step S1051, the inventory information of the target product is updated in a case of the completion of the production scheduling order.

In step S1052, a second shipment factory is determined based on the inventory information.

In step S1053, the delivery order is generated based on the delivery address in the second product order and a shipping address of the second shipment factory and is sent to the logistics platform.

In the embodiment of the present disclosure, after the completion of the production scheduling order, the inventory information of the target product is reconfirmed to prevent a change in the inventory information of the target product during the production process due to other orders or events.

In a possible implementation, the order processing method of the embodiment of the present disclosure further includes steps S201 and S202.

In step S201, at least one third shipment factory is determined based on the inventory information of the target product in a case where the target product in the second product order is in stock.

In step S202, the delivery order is generated based on the delivery address in the product order and a shipping address of the at least one third shipment factory and is sent to the logistics platform.

In the embodiment of the present disclosure, for the product in stock, production is not required, and the third shipment factory may be directly determined based on the inventory information.

If there is a plurality of third shipment factories, the logistics platform may plan delivery routes, different vehicle combinations, carpooling, and the like, in order to reduce the logistics cost.

In a possible implementation, the step S201 of determining the at least one third shipment factory based on the inventory information of the target product in the case where the target product in the second product order is in stock includes the follow step.

Available shipment factories are determined based on the inventory information of the target product in the case where the target product in the second product order is in stock.

The at least one third shipment factory is determined from the available shipment factories based on a preferential shipment rule.

In the embodiment of the present disclosure, common preferential shipment rules include the followings rules.

A first in first out (FIFO) rule, in which products that are produced and arrived at a warehouse earliest are firstly shipped from the warehouse. It ensures that products in inventory do not expire or deteriorate, and encourages enterprises to sell old inventory in a timely manner.

A last in first out (LIFO) rule, in which products that recently arrived at the warehouse are first released from the warehouse. This method may result in older products being kept in the warehouse, but sometimes used in tax planning.

A rule of shipment according to an order priority, in which it is possible to determine which order is shipped firstly based on the priority of customer order. An urgent order or an order from an important customer may have higher priority.

A rule of shipment according to product type or characteristics, in which products of different types or characteristics may have different priority for shipment. For example, high value-added products may be prioritized for delivery as they may contribute more to an enterprise's profits.

A rule of shipment based on remaining inventory, in which an enterprise may prioritize products with lower remaining inventory to reduce inventory backlog.

A rule of shipment according to sales forecast, in which if an enterprise has sales forecast data, it can adjust a shipment plan based on this data to ensure that products are ready before a peak demand season.

A rule of shipment based on geographical location, in which if an enterprise has multiple warehouses or factories, it can determine which warehouse for shipment based on a geographical location from products to the customer. This may reduce the logistics cost and transportation time.

A rule of delivery based on quality and inspection result, in which high quality products are usually prioritized for delivery, while products that require further inspection or processing may be delayed for delivery.

A rule of shipment according to production date or batch number, in which production date or batch number of a product may be used to determine which products should be shipped first to ensure freshness and compliance.

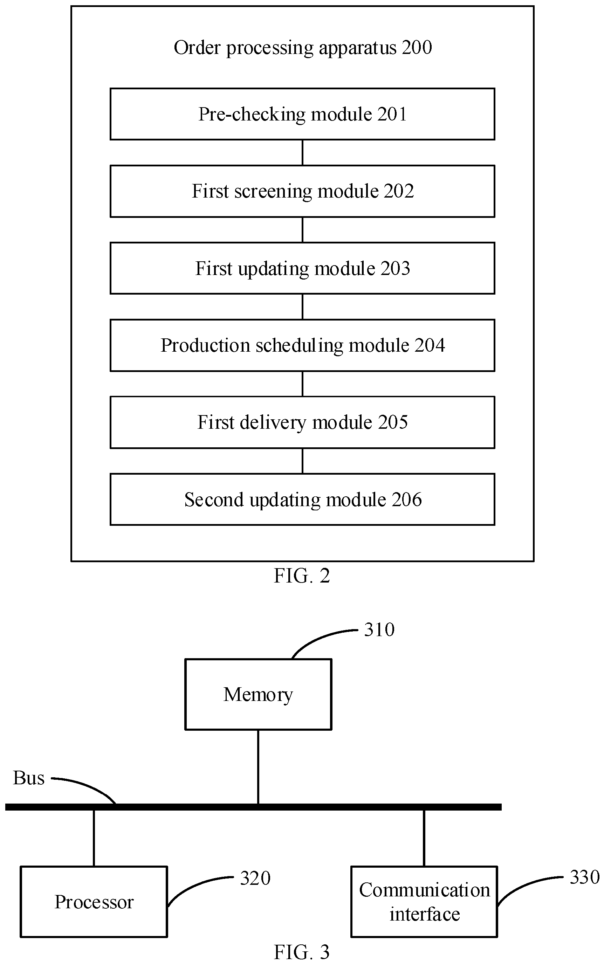

FIG. 2 is a structural schematic diagram of an order processing control apparatus provided by the embodiment of the present disclosure. As shown in FIG. 2, the apparatus includes the followings.

A pre-checking module 201 is configured to pre-check a first product order on an online shopping platform to obtain a second product order.

A first screening module 202 is configured to determine at least one target production factory from a plurality of production factories based on product parameters of a target product or an estimated cost in a case where the second product order needs to be produced.

A first updating module 203 is configured to update the second product order on the online shopping platform based on latest progress information of a production scheduling order obtained from the target production factory.

A production scheduling module 204 is configured to generate the production scheduling order of the target product and send the production scheduling order to the at least one target production factory.

A first delivery module 205 is configured to generate a delivery order based on inventory information of the target product after completion of the production scheduling order and send the delivery order to a logistics platform.

A second updating module 206 is configured to update the second product order on the online shopping platform based on latest progress information of the delivery order obtained from the logistics platform.

In a possible implementation, the pre-checking module 201 is configured to:
obtain the first product order drafted by a user from the online shopping platform;
determine product parameters of a differentiated product in a case where the first product order includes the differentiated product; and
obtain the second product order which has been pre-checked based on the product parameters of the differentiated product and a preset producible list, where the preset producible list is obtained based on product parameter ranges of production devices of the plurality of production factories.

In a possible implementation, the first screening module 202 is configured to:
determine the at least one target production factory from the plurality of production factories based on the product parameters of the target product in a case where the second product order needs to be produced and the target product is the differentiated product.

In a possible implementation, the first screening module 202 is configured to:
determine the at least one target production factory from the plurality of production factories based on estimated logistics costs in a case where the second product order needs to be produced and the target product is a regular product.

In a possible implementation, the first screening module 202 is configured to:
determine a first shipment factory based on existing inventory information of the target product in a case where the target product of the second product order is the regular product and has insufficient inventory;
screen a plurality of neighboring factories from the plurality of production factories based on a delivery address of the second product order and an address of the first shipment factory;
combine at least one of the plurality of neighboring factories with the first shipment factory to obtain a plurality of production schemes;
determine the estimated logistics costs of the plurality of production schemes;
determine an optimal target production scheme based on the estimated logistics costs; and
obtain the target production factory based on the first shipment factory and a neighboring factory corresponding to the target production scheme.

In a possible implementation, the production scheduling module 204 is configured to:
update the inventory information of the target product in a case of the completion of the production scheduling order;
determine a second shipment factory based on the inventory information; and
generate the delivery order based on a delivery address in the second product order and a shipping address of the second shipment factory and send the delivery order to the logistics platform.

In a possible implementation, the order processing apparatus further includes:
a second screening module configured to determine at least one third shipment factory based on the inventory information of the target product in a case where the target product in the second product order is in stock; and
a second delivery module configured to generate the delivery order based on a delivery address in the product order and a shipping address of the at least one third shipment factory and send the delivery order to the logistics platform.

In a possible implementation, the second screening module is configured to:
determine available shipment factories based on the inventory information of the target product in the case where the target product in the second product order is in stock; and
determine the at least one third shipment factory from the available shipment factories based on a preferential shipment rule.

Descriptions of the specific functions and examples of each module and submodule of the device according to the embodiment of the present disclosure may refer to related descriptions of corresponding steps of the above method implements, and will not be repeated here.

FIG. 3 is a block diagram of an electronic device for implementing the embodiment of the present disclosure. As shown in FIG. 3, the electronic device includes a memory 310 and a processor 320, the memory 310 stores a computer program is capable of being run on the processor 320. Each of a number of memory 310 and a number of processor 320 may be one or more. The memory 310 may store one or more computer programs that, when executed by the electronic device, cause the electronic device to execute the method provided in the above method implements. The electronic device may also include a communication interface 330 for communicating with an external device for data exchange and transmission.

If the memory 310, the processor 320, and the communication interface 330 are implemented independently, the memory 310, the processor 320, and the communication interface 330 may be connected to each other and communicate with each other through a bus. The bus may be an Industry Standard Architecture (ISA) bus, a Peripheral Component Interconnect (PCI) bus, an Extended Industry Standard Architecture (EISA) bus, or the like. The bus may be divided into an address bus, a data bus, a control bus, and the like. For ease of representation, only one thick line is used to represent the bus in FIG. 3, but it does not mean that there is only one bus or one type of bus.

Alternatively, in terms of specific implementation, if the memory 310, the processor 320, and the communication interface 330 are integrated on a single chip, the memory 310, the processor 320, and the communication interface 330 may communicate with each other through internal interfaces.

It should be understood that the above processor may be a Central Processing Unit (CPU), or may be another general-purpose processor, a Digital Signal Processor (DSP), an application specific integrated circuit (ASIC), a field programmable gate array (FPGA) or another programmable logic device, a discrete gate or a transistor logic device, a discrete hardware component, or the like. The general-purpose processor may be a microprocessor or any conventional processor. It is worth noting that processor may be a processor that supports an advanced RISC machine (ARM) architecture.

Further, alternatively, the above memory may include a read-only memory and a random access memory, as well as a non-volatile random access memory. The memory may be either a volatile memory or a non-volatile memory, or may include both the volatile memory and the non-volatile memory. The non-volatile memory may include a read-only memory (ROM), a programmable read-only memory (PROM), an erasable programmable read-only memory (EPROM), an electrically erasable programmable read-only memory (EEPROM), or a flash memory. The volatile memory may include a random access memory (RAM), which is used as an external cache. Many forms of the RAM are available through illustrative but not restrictive explanations, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink DRAM (SLDRAM) and a direct RAMBUS RAM (DR RAM).

In the above embodiment, it may be fully or partially implemented through software, hardware, firmware, or any combination thereof. When implemented using the software, it may be fully or partially implemented in a form of a computer program product. The computer program product includes one or more computer instructions. When loading and executing the computer instructions on a computer, all or part of the processes or functions described in the embodiment of the present disclosure are generated. The computer may be a general-purpose computer, a specialized computer, a computer network, or other programmable device. The computer instructions may be stored in a computer readable storage medium or transmitted from one computer readable storage medium to another, for example, the computer instructions may be transmitted from a website, a computer, a server or a data center to another website site, computer, server, or data center through a wired (such as a coaxial cable, an optical fiber, a digital subscriber line (DSL)) or wireless (such as infrared, Bluetooth, microwave, or the like) manner. The computer readable storage medium may be any available medium that the computer may access, or a data storage device such as a server or data center that includes one or more integrated available medium. The available medium may be a magnetic medium (such as a floppy disk, a hard drive, a magnetic tape), an optical medium (such as a digital Versatile disc (DVD)), or a semiconductor medium (such as a solid state disk (SSD)), or the like. It is worth noting that the computer readable storage medium mentioned in this disclosure may be the non-volatile storage medium, in other words, it may be a non-transient storage medium.

Those having ordinary sill in the art may understand that all or part of the steps to implement the above embodiment may be completed through hardware, or by instructing relevant hardware through programs. The programs may be stored in the computer readable storage medium, which may be a read only memory, a magnetic disk, an optical disk, or the like.

In the description of the embodiments of the present disclosure, reference terms "one embodiment", "some embodiments", "examples", "specific examples", "some examples", or the like mean that specific features, structures, materials, or characteristics described in combination with an embodiment or example are included in at least one embodiment or example of the present disclosure. Moreover, the specific features, structures, materials, or characteristics described may be combined in an appropriate manner in any one or more embodiments or examples. In addition, those having ordinary skill in the art may integrate and combine different embodiments or examples described in the specification, as well as features of different embodiments or examples, without mutual contradiction.

In the description of the embodiments of the present disclosure, "/" means "or", unless otherwise specified. For example, "A/B" means A or B. "And/or" herein only an association relationship for describing associated objects, means there are three relationships. For example, "A and/or B" may means there is only A, there is both A and B, and there is only B.

In the description of the embodiments of the present disclosure, terms "first" and "second" are only used for a descriptive purpose and cannot be understood as indicating or implying relative importance or implying the quantity of the indicated technical features. Therefore, features limited to "first" and "second" may explicitly or implicitly include one or more of these features. In the description of the embodiments of the present disclosure, unless otherwise specified, the meaning of "a plurality of" refers to two or more.

The foregoing is only exemplary embodiments of the disclosure and are not intended to limit thereto. Any modification, equivalent replacement, improvement, and the like made within the principles of the disclosure shall be included within the scope of protection of the disclosure.

## Claims

1. An order processing method, **characterized by** comprising:
pre-checking (S101) a first product order on an online shopping platform to obtain a second product order;
determining (S102) at least one target production factory from a plurality of production factories based on product parameters of a target product or an estimated cost in a case where the second product order needs to be produced;
generating (S103) a production scheduling order of the target product and sending the production scheduling order to the at least one target production factory;
updating (S104) the second product order on the online shopping platform based on latest progress information of the production scheduling order obtained from the target production factory;
generating (S105) a delivery order based on inventory information of the target product after completion of the production scheduling order and sending the delivery order to a logistics platform; and
updating (S106) the second product order on the online shopping platform based on latest progress information of the delivery order obtained from the logistics platform.

2. The method of claim 1, wherein pre-checking the first product order on the online shopping platform to obtain the second product order comprises:
obtaining the first product order drafted by a user from the online shopping platform;
determining product parameters of a differentiated product in a case where the first product order comprises the differentiated product; and
obtaining the second product order which has been pre-checked based on the product parameters of the differentiated product and a preset producible list, wherein the preset producible list is obtained based on product parameter ranges corresponding to production devices of the plurality of production factories.

3. The method of claim 1, wherein determining the at least one target production factory from the plurality of production factories based on the product parameters of the target product or the estimated cost in the case where the second product order needs to be produced comprises:
determining the at least one target production factory from the plurality of production factories based on the product parameters of the target product in a case where the second product order needs to be produced and the target product is a differentiated product.

4. The method of claim 1, wherein determining the at least one target production factory from the plurality of production factories based on the product parameters of the target product or the estimated cost in the case where the second product order needs to be produced comprises:
determining the at least one target production factory from the plurality of production factories based on estimated logistics costs in a case where the second product order needs to be produced and the target product is a regular product.

5. The method of claim 4, wherein determining the at least one target production factory from the plurality of production factories based on the estimated logistics costs in the case where the second product order needs to be produced and the target product is the regular product comprises:
determining a first shipment factory based on existing inventory information of the target product in a case where the target product of the second product order is the regular product and has insufficient inventory;
screening a plurality of neighboring factories from the plurality of production factories based on a delivery address of the second product order and an address of the first shipment factory;
combining at least one of the plurality of neighboring factories with the first shipment factory to obtain a plurality of production schemes;
determining the estimated logistics costs of the plurality of production schemes;
determining an optimal target production scheme based on the estimated logistics costs; and
obtaining the target production factory based on the first shipment factory and a neighboring factory corresponding to the target production scheme.

6. The method of claim 1, wherein generating the delivery order based on the inventory information of the target product after the completion of the production scheduling order and sending the delivery order to the logistics platform comprises:
updating the inventory information of the target product in a case of the completion of the production scheduling order;
determining a second shipment factory based on the inventory information; and
generating the delivery order based on a delivery address in the second product order and a shipping address of the second shipment factory and sending the delivery order to the logistics platform.

7. The method of claim 1, further comprising:
determining at least one third shipment factory based on the inventory information of the target product in a case where the target product in the second product order is in stock; and
generating the delivery order based on a delivery address in the product order and a shipping address of the at least one third shipment factory and sending the delivery order to the logistics platform;
wherein determining the at least one third shipment factory based on the inventory information of the target product in the case where the target product in the second product order is in stock comprises:
determining available shipment factories based on the inventory information of the target product in the case where the target product in the second product order is in stock; and
determining the at least one third shipment factory from the available shipment factories based on a preferential shipment rule.

8. An order processing apparatus (200), **characterized by** comprising:
a pre-checking module (201) configured to pre-check a first product order on an online shopping platform to obtain a second product order;
a first screening module (202) configured to determine at least one target production factory from a plurality of production factories based on product parameters of a target product or an estimated cost in a case where the second product order needs to be produced;
a first updating module (203) configured to update the second product order on the online shopping platform based on latest progress information of a production scheduling order obtained from the target production factory;
a production scheduling module (204) configured to generate the production scheduling order of the target product and send the production scheduling order to the at least one target production factory;
a first delivery module (205) configured to generate a delivery order based on inventory information of the target product after completion of the production scheduling order and send the delivery order to a logistics platform; and
a second updating module (206) configured to update the second product order on the online shopping platform based on latest progress information of the delivery order obtained from the logistics platform.

9. The apparatus of claim 8, wherein the pre-checking module is configured to:
obtain the first product order drafted by a user from the online shopping platform;
determine product parameters of a differentiated product in a case where the first product order comprises the differentiated product; and
obtain the second product order which has been pre-checked based on the product parameters of the differentiated product and a preset producible list, wherein the preset producible list is obtained based on product parameter ranges of production devices of the plurality of production factories.

10. The apparatus of claim 8, wherein the first screening module is configured to:
determine the at least one target production factory from the plurality of production factories based on the product parameters of the target product in a case where the second product order needs to be produced and the target product is a differentiated product.

11. The apparatus of claim 8, wherein the first screening module is configured to:
determine the at least one target production factory from the plurality of production factories based on estimated logistics costs in a case where the second product order needs to be produced and the target product is a regular product.

12. The apparatus of claim 11, wherein the first screening module is configured to:
determine a first shipment factory based on existing inventory information of the target product in a case where the target product of the second product order is the regular product and has insufficient inventory;
screen a plurality of neighboring factories from the plurality of production factories based on a delivery address of the second product order and an address of the first shipment factory;
combine at least one of the plurality of neighboring factories with the first shipment factory to obtain a plurality of production schemes;
determine the estimated logistics costs of the plurality of production schemes;
determine an optimal target production scheme based on the estimated logistics costs; and
obtain the target production factory based on the first shipment factory and a neighboring factory corresponding to the target production scheme.

13. The apparatus of claim 8, wherein the production scheduling module is configured to:
update the inventory information of the target product in a case of the completion of the production scheduling order;
determine a second shipment factory based on the inventory information; and
generate the delivery order based on a delivery address in the second product order and a shipping address of the second shipment factory and send the delivery order to the logistics platform.

14. The apparatus of claim 8, further comprising:
a second screening module configured to determine at least one third shipment factory based on the inventory information of the target product in a case where the target product in the second product order is in stock; and
a second delivery module configured to generate the delivery order based on a delivery address in the product order and a shipping address of the at least one third shipment factory and send the delivery order to the logistics platform;
wherein the second screening module is configured to:
determine available shipment factories based on the inventory information of the target product in the case where the target product in the second product order is in stock; and
determine the at least one third shipment factory from the available shipment factories based on a preferential shipment rule.

15. A non-transitory computer-readable storage medium storing a computer instruction thereon, wherein the computer instruction is used to cause a computer to execute the method of any one of claims 1 to 7.
